(19) Europäisches Patentamt
European Patent Office
Office européen des brevets

(11) **EP 2 870 437 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(21) Anmeldenummer: **13727610.1**

(22) Anmeldetag: **07.06.2013**

(51) Int Cl.:
**G01F 23/288** *(2006.01)*    G01N 9/24 *(2006.01)*
**G01F 25/00** *(2006.01)*

(86) Internationale Anmeldenummer:
**PCT/EP2013/061803**

(87) Internationale Veröffentlichungsnummer:
**WO 2014/005794 (09.01.2014 Gazette 2014/02)**

(54) **RADIOMETRISCHE MESSANORDNUNG UND VERFAHREN ZUR DETEKTION VON ANSATZBILDUNG IN EINER RADIOMETRISCHEN MESSANORDNUNG**

RADIOMETRIC MEASURING ARRANGEMENT AND PROCEDURE FOR DETECTING BUILD-UP IN A RADIOMETRIC MEASURING ARRANGEMENT

SYSTÈME DE MESURE RADIOMÉTRIQUE ET PROCÉDÉ DE DÉTECTION DE FORMATION DE DÉPÔTS DANS UN SYSTÈME DE MESURE RADIOMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2012 DE 102012105922**

(43) Veröffentlichungstag der Anmeldung:
**13.05.2015 Patentblatt 2015/20**

(73) Patentinhaber: **Endress+Hauser SE+Co. KG
79689 Maulburg (DE)**

(72) Erfinder:
• **GLASER, Dirk
79585 Steinen (DE)**
• **URBAN, Martin
79541 Lörrach (DE)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
EP-A2- 1 921 435     WO-A2-02/18883
DE-A1- 3 037 413     US-A- 3 594 575
US-A1- 2004 128 098

**Beschreibung**

Die Erfindung betrifft ein Verfahren zur Detektion von Ansatzbildung in Behältern, in denen eine radiometrische Messanordnung zur Messung und/oder Überwachung einer Messgröße, insb. eines Füllstands oder einer Dichte eines in einem Behälter befindlichen Füllguts, vorgesehen ist, sowie eine radiometrische Messanordnung, mit einer Messeinrichtung, die im Betrieb radioaktive Strahlung entlang eines Messstrahlenpfads durch den Behälter sendet, die einen Detektor umfasst, der eine aus dem Behälter entlang des Messstrahlenpfads austretende Strahlungsintensität misst, und die eine Auswerteeinheit umfasst, die anhand von bei ansatzfreiem Behälter ermittelten Kalibrationsdaten der Messeinrichtung und der gemessenen Strahlungsintensität ein der Messgröße entsprechendes Messergebnis bestimmt und ausgibt.

Radiometrische Messanordnungen werden in der industriellen Messtechnik beispielsweise zur Messung eines Füllstands eines Füllguts in einem Behälter, zur Überwachung eines Über- oder Unterschreitens eines vorbestimmten Füllstands eines Füllgut in einem Behälter, oder zur Messung einer Dichte eines Füllguts eingesetzt.

Radiometrische Messmessanordnungen werden üblicherweise immer dann eingesetzt, wenn herkömmliche Meßmethoden aufgrund besonders rauer Bedingungen am Messort nicht einsetzbar sind. Sehr häufig herrschen z.B. am Messort extrem hohe Temperaturen und Drücke oder es sind chemisch und/oder mechanisch sehr aggressive Umgebungseinflüsse vorhanden, die den Einsatz anderer Messmethoden unmöglich machen.

Das Grundprinzip der radioaktiven Messtechnik beruht darauf, dass einer oder mehrere radioaktive Strahler, wie z.B. $Co_{60}$ oder $Cs_{137}$ Präparate, an einem Messort derart positioniert werden, dass die von ihnen ausgesendete Strahlung einen messtechnisch zu erfassenden Bereich, z.B. einen Teil eines mit einem Füllgut gefüllten Behälters, durchdringt, und eine auf einer dem Strahler gegenüberliegenden Behälterseite austretende Strahlungsintensität mit einem entsprechenden Detektor, z.B. einem Szintillationsdetektor, gemessen wird. Die austretende Strahlungsintensität ist abhängig von der geometrischen Anordnung und der Absorption entlang der vom Strahler zum Detektor zurückgelegten Wegstrecke. Letztere ist bei der Füllstandsmessung abhängig von der Füllhöhe des im Messstrahlenpfad befindlichen Füllguts im Behälter und bei der Dichtemessung von der Dichte des im Messstrahlenpfad befindlichen Füllguts. Folglich ist die austretende Strahlungsintensität ein Maß für den aktuellen Füllstand bzw. die aktuelle Dichte des Füllguts im Behälter.

Es gibt eine Vielzahl industrieller Anwendungen, bei denen sich an den Innenwänden des Behälters mit der Zeit Ansatz bilden kann. Mit Ansatz werden hier Ablagerungen oder Anhaftungen auf den Innenwänden bezeichnet. Ansatz entsteht beispielsweise, wenn das im Behälter befindliche, oder bei rohrförmigen Behältern das den Behälter durchströmende Füllgut, an der Innenwand anhaftet, und sich hierdurch eine in der Regel mit der Zeit durch weitere Ablagerungen oder Anhaftungen immer dicker werdende Ansatzschicht auf der Innenwand des Behälters festsetzt.

Dabei besteht das Problem, dass der Messstrahlenpfad durch den Behälter regelmäßig sowohl bei seinem Eintritt in den Behälter als auch bei seinem Austritt aus dem Behälter durch die Ansatzschicht führt. Entsprechend wird sowohl eintrittsseitig als auch austrittsseitig ein Teil der durch den Behälter hindurch gesendeten Strahlung in der Ansatzschicht absorbiert. Da die Ansatzschicht eine vom Medium abweichende in der Regel höhere Dichte aufweist, absorbiert es radioaktive Strahlung stärker als das Füllgut. Hierdurch wird die im Messbetrieb austretende Strahlungsintensität dauerhaft reduziert, und somit das Messergebnis verfälscht. Aufgrund der ansatzbedingt niedrigeren gemessenen Strahlungsintensität wird ein zu hoher Füllstand bzw. eine zu hohe Dichte gemessen. Wird dieser Messfehler nicht erkannt, so kann das insb. in sicherheitsrelevanten Anwendungen fatale Auswirkungen haben.

Es besteht daher ein Bedarf Ansatzbildung im Behälter möglichst frühzeitig zu erkennen. Dabei ist es gerade in Anwendungen in denen radiometrische Messeinrichtungen eingesetzt werden in der Regel nicht, oder nicht ohne weiteres möglich ist, den Behälter zu öffnen um gegebenenfalls aufgetretene Ansatzbildung frühzeitig festzustellen. In der WO 02/18883 ist eine radiometrische Messeinrichtung zur Messung eines Füllstands und/oder einer Dichte beschrieben. Die Normierung des Messergebnisses mittels eines Vergleichsstrahlenpfads, der oberhalb der maximal möglichen Füllhöhe eines Behälters eingestellt ist, ermöglicht, eine Ansatzbildung durch Abweichungen der normierten Meßkurve zu detektieren.

Darüber hinaus sind prophylaktisch sehr häufig ausgeführte Behälterreinigungen, bei denen Ansatz entfernt wird, gerade in diesen Anwendungen in der Regel besonders aufwendig und kostspielig.

In der US 3, 594,575 A1 ist eine Füllstandsmessanordnung beschrieben, bei der gegebenenfalls im Behälter aufgetretene Ansatzbildung durch eine vor Ort ausgeführte Neukalibration der Messanordnung berücksichtigt werden kann. Bei der Neukalibration wird die Abhängigkeit der gemessenen Strahlungsintensitäten vom Füllstand bei einem aktuell vorliegenden Behälterzustand erneut bestimmt. Im laufenden Betrieb ist es jedoch nicht möglich, festzustellen ob sich Ansatz gebildet hat. Insoweit bleibt es auch hier bei einer unerkannten Messergebnisverfälschung durch Ansatzbildung.

Es ist eine Aufgabe der Erfindung eine radiometrische Messanordnung und ein damit ausführbares Verfahren anzugeben, mit der bzw. mit dem Ansatzbildung im Behälter der Messanordnung detektierbar ist.

Hierzu umfasst die Erfindung ein Verfahren zur Ansatzdetektion in einem Behälter, in dem eine radiometrische Messeinrichtung zur Messung und/oder Überwachung einer Messgröße, insb. eines Füllstands oder einer Dichte, eines in dem Behälter befindlichen Füllguts, vorgesehen ist,

- die im Betrieb radioaktive Strahlung entlang eines Messstrahlenpfads durch den Behälter sendet, eine aus dem Behälter entlang des Messstrahlenpfads austretende Strahlungsintensität misst, und anhand von bei ansatzfreiem Behälter ermittelten Kalibrationsdaten der Messeinrichtung und der gemessenen Strahlungsintensität ein der Messgröße entsprechendes Messergebnis bestimmt, bei dem
- mittels einer Vergleichsmesseinrichtung radioaktive Strahlung entlang eines Vergleichsstrahlenpfads durch den Behälter gesendet, eine aus dem Behälter entlang des Vergleichsstrahlenpfads austretende Strahlungsintensität gemessen, und anhand von bei ansatzfreiem Behälter ermittelten Kalibrationsdaten der Vergleichsmesseinrichtung und der gemessenen Strahlungsintensität ein der Messgröße entsprechendes Messergebnis bestimmt wird,

-- wobei der Vergleichsstrahlenpfad derart durch den Behälter verläuft, dass beim Vorliegen einer Ansatzschicht auf den Innenwänden des Behälters, ein Verhältnis einer Summe der beiden durch die Ansatzschicht verlaufenden Segmente des Messstrahlenpfads zu der Länge eines zwischen diesen beiden Segmenten verlaufenden weiteren Segments des Messstrahlenpfads von dem auf die gleiche Weise für den Vergleichsstrahlenpfad gebildeten Verhältnis verschieden ist,

wobei aufgrund der Kalibration der Messeinrichtung und der Vergleichsmesseinrichtung bei ansatzfreiem Behälter (1) die Messergebnisse der beiden Einrichtungen bei ansatzfreiem Behälter (1) innerhalb der erzielbaren Messgenauigkeit übereinstimmen, und

- ein Auftreten von Ansatzbildung anhand von im laufenden Betrieb ermittelten Abweichungen zwischen den Messergebnissen der Messeinrichtung und den Messergebnissen der Vergleichsmesseinrichtung detektiert wird.

Gemäß einer bevorzugten Ausgestaltung ist das Verhältnis der Summe der beiden durch die Ansatzschicht verlaufenden Segmente des Messstrahlenpfads zu der Länge des zwischen diesen beiden Segmenten verlaufenden weiteren Segments des Messstrahlenpfads kleiner als das auf die gleiche Weise für den Vergleichsstrahlenpfad gebildete Verhältnis.

Gemäß einer weiteren bevorzugten Ausgestaltung wird beim Überschreiten eines vorgegebenen Schwellwerts für die Abweichung zwischen den beiden Messergebnissen eine die radiometrische Messung der Messgröße beeinträchtigende Ansatzbildung im Behälter festgestellt.

Darüber hinaus wird anhand der Abweichungen zwischen den Messergebnissen der Messeinrichtung und den Messergebnissen der Vergleichsmesseinrichtung vorzugsweise eine bedarfsabhängige Terminierung von Behälterreinigungen vorgenommen.

Weiter umfasst die Erfindung eine Weiterbildung des Verfahrens, bei der bei bekannter Dichte des Ansatzes anhand

- der mit der Messeinrichtung gemessenen Strahlungsintensität und der mit der Vergleichsmesseinrichtung gemessenen Strahlungsintensität, und
- einer Behältergeometrie und einer Lage von Mess-und Vergleichsstrahlenpfad im Behälter,

eine Dicke der im Behälter anhaftenden Ansatzschicht bestimmt wird.

Eine Weiterbildung der letztgenannten Weiterbildung umfasst ein Verfahren, bei dem anhand der mit der Messeinrichtung gemessenen Strahlungsintensität, der Dicke und der Dichte der vorliegenden Ansatzschicht ein hinsichtlich eines ansatzbedingten Messfehlers korrigiertes Messergebnis bestimmt wird.

Darüber hinaus umfasst die Erfindung eine radiometrische Messanordnung zur Messung und/oder Überwachung einer Messgröße, insb. eines Füllstands oder einer Dichte, eines in einem Behälter befindlichen Füllguts, mit

- einer Messeinrichtung,

-- die im Betrieb radioaktive Strahlung entlang eines Messstrahlenpfads durch den Behälter sendet,
-- die einen Detektor umfasst, der eine aus dem Behälter entlang des Messstrahlenpfads austretende Strahlungsintensität misst, und
-- die eine Auswerteeinheit umfasst, die anhand von bei ansatzfreiem Behälter ermittelten Kalibrationsdaten der Messeinrichtung und der gemessenen Strahlungsintensität ein der Messgröße entsprechendes Messergebnis bestimmt und ausgibt, und

- einer Vergleichsmesseinrichtung,

-- die im Betrieb radioaktive Strahlung entlang eines Vergleichsstrahlenpfads durch den Behälter hindurch sendet,

-- wobei der Vergleichsstrahlenpfad derart durch den Behälter verläuft, dass beim Vorliegen einer Ansatzschicht auf den Innenwänden des Behälters ein Verhältnis einer Summe der beiden durch die Ansatzschicht verlaufenden Segmente des Messstrahlenpfads zu der Länge eines zwischen diesen beiden Segmenten verlaufenden weiteren Segments des Messstrahlenpfads von dem auf die gleiche Weise für den Vergleichsstrahlenpfad gebildeten Verhältnis verschieden ist,

-- die einen Detektor umfasst, der eine aus dem Behälter entlang des Vergleichsstrahlenpfads austretende Strahlungsintensität misst, und

-- die eine Auswerteeinheit umfasst, die anhand von bei ansatzfreiem Behälter ermittelten Kalibrationsdaten der Vergleichsmesseinrichtung und der gemessenen Strahlungsintensität ein der Messgröße entsprechendes Messergebnis bestimmt, und für eine Detektion von Ansatzbildung im Behälter zur Verfügung stellt, bei der Ansatz anhand von im laufenden Betrieb ermittelten Abweichungen zwischen den Messergebnissen der Messeinrichtung und den Messergebnissen der Vergleichsmesseinrichtung detektiert wird.

Gemäß einer bevorzugten Ausgestaltung umfasst die radiometrische Messanordnung eine an die Messeinrichtung und die Vergleichsmesseinrichtung angeschlossene Auswerteinheit, die im Betrieb fortlaufend die Abweichungen zwischen den Messergebnissen der Messeinrichtung und den Messergebnissen der Vergleichsmesseinrichtung bestimmt.

Eine ersten Variante der Erfindung umfasst eine radiometrische Messanordnung, bei der die Messeinrichtung und die Vergleichsmesseinrichtung jeweils einen außenseitlich am Behälter angeordneten radioaktiven Strahler aufweisen, und bei der die Detektoren der Messeinrichtung und der Vergleichsmesseinrichtung jeweils auf einer dem jeweiligen Strahler entlang des Mess- bzw. des Vergleichsstrahlenpfads gegenüberliegenden Seite des Behälters außenseitlich am Behälter angeordnet sind.

Gemäß einer bevorzugten Ausgestaltung der ersten Variante weist der Behälter eine kreisförmige Querschnittsfläche auf, und der Messstrahlenpfad verläuft parallel versetzt zum Vergleichsstrahlenpfad.

Eine zweite Variante der Erfindung umfasst eine radiometrische Messanordnung, bei der

- nur ein einziger außenseitlich am Behälter angeordneter radioaktiver Strahler vorgesehen ist, der im Betrieb Strahlung entlang des Messstrahlenpfads und entlang des Vergleichsstrahlenpfads aussendet,
- der Messstrahlenpfad und der Vergleichsstrahlenpfad unter einem Winkel zueinander verlaufen,
- der Detektor der Messeinrichtung auf einer dem einzigen Strahler entlang des Messstrahlenpfads gegenüberliegenden Seite des Behälters außenseitlich am Behälter angeordnet ist, und
- der Detektor der Vergleichsmesseinrichtung auf einer dem einzigen Strahler entlang des Vergleichsstrahlenpfads gegenüberliegenden Seite des Behälters außenseitlich am Behälter angeordnet ist.

Weiter umfasst die Erfindung eine Variante einer erfindungsgemäßen radiometrischen Messanordnung, bei der

- die Messeinrichtung und die Vergleichsmesseinrichtung jeweils eine Einrichtung zur Feststellung und/oder Überwachung eines Über- oder Unterschreitens eines vorbestimmten Füllstands in dem Behälter sind,
- die Messeinrichtung und die Vergleichsmesseinrichtung jeweils einen Ausgang aufweisen, über den sie ein der von ihnen gemessenen Strahlungsintensität anhand von bei ansatzfreiem Behälter ermittelten Kalibrationsdaten zugeordnetes Messergebnis ausgeben, und
- die Messeinrichtung anhand der gemessenen Strahlungsintensität oder anhand des Messergebnisses das Über- oder Unterschreiten des vorbestimmten Füllstands feststellt und/oder überwacht.

Die Erfindung und weitere Vorteile werden nun anhand der Figuren der Zeichnung, in denen drei Ausführungsbeispiele dargestellt sind, näher erläutert; gleiche Teile sind in den Figuren mit gleichen Bezugszeichen versehen.

Fig. 1 zeigt:     eine radiometrische Dichtemessanordnung im Querschnitt;

Fig. 2 zeigt:     einen Längsschnitt durch die Dichtemessanordnung von Fig. 1 in der Ebene der Messeinrichtung;

Fig. 3 zeigt:     eine alternative Ausgestaltung einer erfindungsgemäßen Dichtemessanordnung; und

Fig. 4 zeigt:     einen Längsschnitt durch eine Füllstandsmessanordnung in der Ebene der Messeinrichtung.

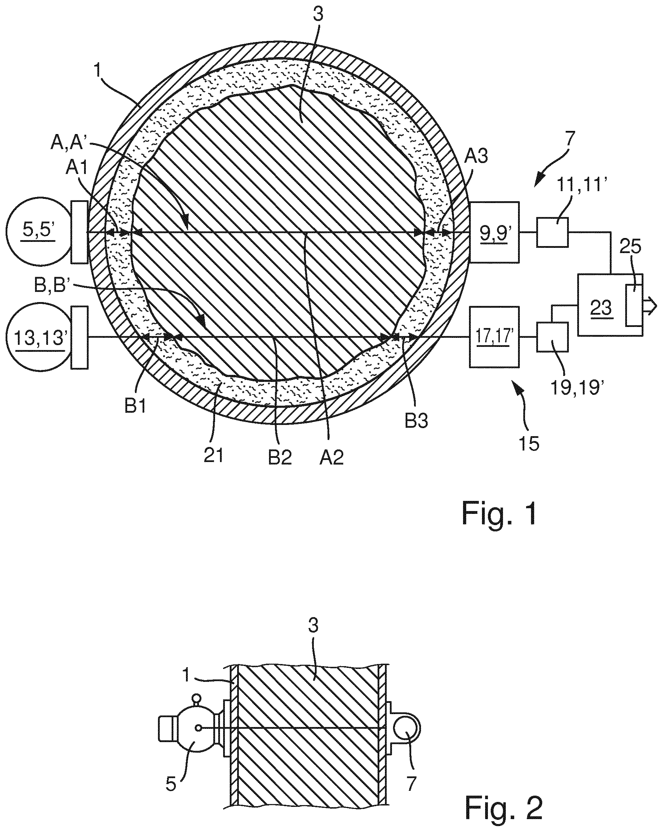

Fig. 1 zeigt eine Prinzipskizze eines ersten Ausführungsbeispiels einer erfindungsgemäßen radiometrischen Messanordnung zur Messung und/oder Überwachung einer Messgröße, insb. eines Füllstands oder einer Dichte $\rho$ eines in einem Behälter 1 befindlichen Füllguts 3, mit der das erfindungsgemäße Verfahren zur Detektion von Ansatzbildung in dem Behälter 1 der Messanordnung ausführbar ist. Die Erfindung ist nachfolgend zunächst am Beispiel einer Messanordnung zur Messung der Dichte $\rho$ des Füllguts beschrieben.

Der Behälter 1 ist hier im Querschnitt dargestellt und beispielsweise ein vom Füllgut 1 durchströmtes Rohr oder ein aufrecht stehender zylindrischer mit dem Füllgut 3 gefüllter Tank.

Die Messanordnung umfasst eine Messeinrichtung mit der die Dichte $\rho$ des Füllgut 3 gemessen wird. Diese umfasst einen außenseitlich am Behälter 1 angeordneten radioaktiven Strahler 5, der im Betrieb radioaktive Strahlung entlang eines Messstrahlenpfads A durch den Behälter 1 hindurch sendet. Zur Erzielung einer möglichst hohen Messgenauigkeit führt der Messstrahlenpfad A vorzugsweise durch einen Mittelpunkt einer Querschnittsfläche des Behälters 1. Hierdurch weist der für die Messgenauigkeit relevante im Behälter 1 verlaufende Teil des Messstrahlenpfads A eine in diesem Behälter 1 maximal mögliche Länge auf, so dass der Messeffekt maximal ist.

Darüber hinaus umfasst die Messeinrichtung eine Messeinheit 7, die eine aus dem Behälter 1 entlang des Messstrahlenpfads A austretende Strahlungsintensität misst, und anhand von bei ansatzfreiem Behälter 1 ermittelten Kalibrationsdaten der Messeinrichtung und der gemessenen Strahlungsintensität ein der Messgröße, hier der Dichte $\rho$ , entsprechendes Messergebnis bestimmt und ausgibt. Fig. 2 zeigt hierzu einen Längsschnitt durch die radiometrische Messanordnung von Fig. 1 in der Ebene der Messeinrichtung.

Die Messeinheit 7 umfasst hierzu einen Detektor 9, der die darauf auftreffende Strahlungsintensität in ein die gemessene Strahlungsintensität wiedergebendes elektrisches Signal umwandelt und eine daran angeschlossene Auswerteeinheit 11, die anhand des elektrischen Signals und der Kalibrationsdaten ein der gemessenen Dichte $\rho$ entsprechendes Messergebnis bestimmt und ausgibt.

Die Kalbrationsdaten werden im einfachsten Fall durch einen Zweipunktabgleich bestimmt, der beispielsweise im Rahmen einer Inbetriebnahme der Messeinrichtung bei ansatzfreiem Behälter 1 ausgeführt wird. Hierzu wird beispielsweise die Strahlungsintensität gemessen, die auf den Detektor 9 auftrifft, wenn dieser mit einem Füllgut 3 gefüllt ist, das eine einer Messbereichsuntergrenze der Messeinrichtung entsprechende Dichte $\rho_{min}$ aufweist, und die Strahlungsintensität gemessen, die auf den Detektor 9 auftrifft, wenn dieser mit einem Füllgut 3 gefüllt ist, das eine einer Messbereichsobergrenze der Messeinrichtung entsprechende Dichte $\rho_{max}$ aufweist. Durch diese beiden die gemessene Strahlungsintensität in Abhängigkeit von der Dichte angebenden Messpunkte kann nun ein Skala definiert werden, anhand derer jedem im Messbetrieb zwischen den beiden Extremwerten liegenden gemessenen Strahlungsintensität eine zugehörige Dichte $\rho$ zugeordnet wird. Dies ist hier jedoch nur als ein mögliches Beispiel erwähnt. In der radiometrischen Messtechnik werden in der Regel aufwendigere Kalibrationsverfahren eingesetzt, die beispielsweise mehr Abgleichspunkte, Linearisierungsverfahren sowie Kompensationsverfahren zur Kompensation von Abhängigkeiten der gemessenen Strahlungsintensität von weiteren Prozessgrößen, wie zum Beispiel der Temperatur, umfassen.

Erfindungsgemäß umfasst die Messanordnung darüber hinaus eine Vergleichsmesseinrichtung, mit der ebenfalls die Dichte $\rho$ des Füllgut 3 gemessen wird. Letztere kann identisch zu der Messeinrichtung ausgebildet sein. Auch diese umfasst in dem dargestellten Ausführungsbeispiel einen außenseitlich am Behälter 1 angeordneten radioaktiven Strahler 13, der im Betrieb radioaktive Strahlung entlang eines Vergleichsstrahlenpfads B durch den Behälter 1 hindurch sendet, und eine Messeinheit 15, die eine aus dem Behälter 1 entlang des Vergleichsstrahlenpfads B austretende Strahlungsintensität mittels eines Detektors 17 misst, und einer Auswerteeinheit 19 zuführt, die anhand von bei ansatzfreiem Behälter ermittelten Kalibrationsdaten der Vergleichsmesseinrichtung und der gemessenen Strahlungsintensität ein der Dichte $\rho$ entsprechendes Messergebnis bestimmt.

Erfindungsgemäß verläuft der Vergleichsstrahlenpfad B derart durch den Behälter 1 hindurch, dass beim Vorliegen einer Ansatzschicht 21 auf den Innenwänden des Behälters 1, ein Verhältnis VA der im Inneren des Behälters 1 innerhalb und außerhalb der Ansatzschicht 21 verlaufenden Wegstrecken entlang des Messstrahlenpfads A von dem entsprechenden Verhältnis VB entlang des Vergleichsstrahlenpfads B verschieden ist. Dabei ist zu berücksichtigen, dass der Messstrahlenpfad A und der Vergleichsstrahlenpfad B jeweils eingangsseitig durch die Ansatzschicht 21 verlaufen, die innen an der dem jeweiligen Strahler 5, 13 zugewandten Behälterwand anhaftet, und ausgangsseitig durch die Ansatzschicht 21 verlaufen, die innen an der dem jeweiligen Detektor 9, 17 zugewandten Behälterwand anhaften.

Das Verhältnis VA, VB ist jeweils durch das Verhältnis der Summe der Längen der eingangsseitig und ausgangsseitig durch die Ansatzschicht 21 verlaufenden Segmente A1, A3 bzw. B1, B3 des jeweiligen Strahlenpfads zu dem jeweils zwischen diesen beiden Segmenten verlaufenden weiteren Segments A2 bzw. B2 des jeweiligen Strahlenpfads gegeben. D.h. Messstrahlenpfad A und Vergleichsstrahlenpfad B sind erfindungsgemäß derart vorzugeben, dass gilt:

$$VA = \frac{A1 + A3}{A2} \neq VB = \frac{B1 + B3}{B2}$$

Diese Bedingung ist in jedem Behälter 1 ohne weiteres erfüllbar, indem die beiden Strahlenpfade derart positioniert und ausgerichtet werden, dass ihre durch den Behälterinnenraum hindurch führenden Abschnitte unterschiedliche Längen aufweisen.

Das ist für beliebige Behälterquerschnitte immer möglich. So kann beispielsweise der Messstrahlenpfad A in einem besonders breiten Bereich des Behälters 1 durch die Behältermitte geführt werden, während der Vergleichsstrahlenpfad B lediglich einen Randbereich des Behälters 1 durchkreuzt.

In dem dargestellten Beispiel eines Behälters 1 mit kreisförmigem Querschnitt ist dies dadurch realisiert, dass Messstrahlenpfad A und Vergleichsstrahlenpfad B parallel zueinander versetzt durch den Behälter 1 führen, wobei der Messstrahlenpfad A durch die breitere Behältermitte führt.

Da im Hinblick auf die obigen Ausführungen zu der mit der Messeinrichtung erzielbaren Messgenauigkeit vorzugsweise der Strahlenpfad mit der größten im Behälterinnenraum verlaufenden Gesamtlänge als Messstrahlenpfad A verwendet wird, ist das Verhältnis VA vorzugsweise kleiner als das Verhältnis VB. Das bietet den weiteren Vorteil, dass das Messergebnis entlang des Messstrahlenpfads A aufgrund des geringeren Verhältnisses VA auch eine geringere Beeinträchtigung des Messergebnis durch Ansatzbildung erfährt.

Aufgrund der Kalibration von Messeinrichtung und Vergleichsmesseinrichtung bei ansatzfreiem Behälter 1 stimmen die Messergebnisse der beiden Einrichtungen bei ansatzfreiem Behälter 1 innerhalb der erzielbaren Messgenauigkeit überein.

Wird die Messanordnung bei ansatzfreiem Behälter 1 in Betrieb genommen, so stimmen die Messergebnisse zunächst überein. Bildet sich im laufenden Betrieb nun eine mit der Zeit in ihrer Dicke anwachsende Ansatzschicht 21 auf den Behälterinnenwänden, so verändern sich beide Messergebnisse in Abhängigkeit von der Dichte $\rho^A$ und der Dicke der Ansatzschicht 21.

Dies liegt daran, dass Messeinrichtung und Vergleichsmesseinrichtung nun nicht mehr ausschließlich die zu messende Dichte $\rho$ des Füllguts 3, sondern eine entlang des jeweiligen Strahlenpfads im Behälterinnenraum vorliegende mittlere Dichte messtechnisch erfassen. Da die Ansatzschicht 21 regelmäßig eine höhere Dichte $\rho^A$ aufweist, als das Füllgut 3 steigen beide Messergebnisse mit steigender Dicke und mit steigender Dichte $\rho^A$ der Ansatzschicht 21 an.

Dabei gilt für die von der Messeinrichtung gemessene mittlere Dichte $\rho_{gem}$:

$$\rho_{gem} = \frac{(A1 + A3)\rho^A + A2\rho}{A1 + A2 + A3}$$

Entsprechend gilt für die von der Vergleichsmesseinrichtung bestimmte mittlere Dichte $\rho_v$:

$$\rho_v = \frac{(B1 + B3)\rho^A + B2\rho}{B1 + B2 + B3}$$

Aufgrund der erfindungsgemäß vorgegebenen Strahlenpfade steigt die von der Messeinrichtung gemessene Dichte $\rho_{gem}$ jedoch mit steigender Dicke und Dichte der Ansatzschicht 21 deutlich langsamer an als die mit der Vergleichsmesseinrichtung gemessene Dichte $\rho_v$. Das bewirkt, dass die Messergebnisse von Messeinrichtung und Vergleichsmesseinrichtung mit zunehmender Dichte $\rho^A$ und zunehmender Dicke der Ansatzschicht 21 immer weiter voneinander abweichen.

Entsprechend wird die Ansatzbildung im Behälter 1 erfindungsgemäß anhand der im laufenden Betrieb ermittelten Abweichungen der Messergebnisse von Messeinrichtung und Vergleichsmesseinrichtung detektiert. Dabei kann beispielsweise das Verhältnis der beiden Messergebnisse als quantitatives Maß für die Abweichung berechnet werden. Alternativ kann auch deren Differenz als Maß herangezogen werden.

Dabei ist die Größe der Abweichung ein Maß für die Beeinträchtigung der Messgenauigkeit der radiometrischen Messung. Entsprechend kann ein Schwellwert für die Abweichung vorgegeben werden, bei dessen Überschreitung eine die radiometrische Messung der Messgröße beeinträchtigende Ansatzbildung im Behälter 1 festgestellt wird. Die Messung beeinträchtigende Ansatzbildungen können somit frühzeitig erkannt und entsprechend berücksichtigt werden.

Darüber hinaus können die im laufenden Betrieb ermittelten Abweichungen zwischen den Messergebnissen der Messeinrichtung und den Messergebnissen der Vergleichsmesseinrichtung zur bedarfsabhängigen Terminierung von Behälterreinigungen verwendet. Dabei kann die zeitliche Entwicklung der Abweichungen herangezogen werden, um Vorhersagen über den Zeitpunkt zu treffen, zu dem die Abweichung den Schwellwert übersteigt, oder ein anderes beispielsweise benutzerdefiniertes eine Reinigung erforderlich machendes Kriterium erfüllt ist.

Ist die Dichte $\varrho^A$ des Ansatzes bekannt, kann darüber hinaus anhand

- der mit der Messeinrichtung gemessenen Strahlungsintensität $I_A$
- der mit der Vergleichsmesseinrichtung gemessenen Strahlungsintensität $I_B$
- der Behältergeometrie,
- der Lage und der Länge von Mess-und Vergleichsstrahlenpfad A, B, und
- der Dichte $\varrho^A$ des Ansatzes

eine Dicke d der im Behälter 1 anhaftenden Ansatzschicht 21 näherungsweise berechnet werden.

Die hierfür benötigten gemessenen Strahlungsintensitäten $I_A$, $I_B$ werden bei der Messung ohnehin bestimmt, und können somit unmittelbar verwendet werden. Alternativ können sie anhand der Messergebnisse der Messeinrichtung und der Messergebnisse der Vergleichsmesseinrichtung und den zugehörigen Kalibrationsdaten durch zurückrechnen bestimmt werden.

Die Dickenbestimmung bietet den Vorteil, dass das Messergebnis $\varrho^{gem.}$ der Messeinrichtung hinsichtlich des darin enthaltenen ansatzbedingten Messfehlers anhand von Dicke d und Dichte $\varrho^A$ der vorliegenden Ansatzschicht 21 korrigiert werden kann.

Unter der Annahme, dass die Dicke d der Ansatzschicht 21 an den Behälterinnenwänden überall gleich ist, kann anhand der Behältergeometrie und der Lage von Mess-und Vergleichsstrahlenpfad A, B im Behälter 1 ein Verhältnis k der Summe D'= B1 + B3 der Längen der eintrittsseitig und austrittsseitig entlang des Vergleichsstrahlenpfads B durch die Ansatzschichten 21 verlaufenden Segmente zu der Summe D= A1 + A3 der Längen der eintrittsseitig und austrittsseitig entlang des Messstrahlenpfads A durch die Ansatzschichten 21 verlaufenden Segmente bestimmt werden. D.h.

$$k = \frac{D'}{D} = \frac{B1 + B3}{A1 + A3}$$

Dieses Verhältnis k wird nachfolgend zur Vereinfachung des Verständnisses des Dickenbestimmungs- und des Korrekturverfahrens als konstant angenommen. Tatsächlich wird das Verhältnis k aber in den meisten Messanordnungen von der Dicke d abhängig sein. In dem Fall sind die unten angeführten Verfahrensschritte grundsätzlich analog ausführbar. Die einzelnen unten angeführten Gleichungen sind in dem Fall jedoch nicht mehr analytisch sondern nur noch numerisch lösbar.

Bei einer Ansatzschicht 21 homogener Dicke d gilt für die von der Messeinrichtung gemessene Strahlungsintensität $I_A$:

$$I_A = I_{0A} e^{-\mu \varrho^A D} e^{-\mu \varrho^M (XA-D)} \tag{1}$$

mit XA = A1 + A2 + A3
worin

$I_{0A}$ eine von der vom Strahler 5 gesendeten Strahlungsintensität, der verwendeten Strahlungsquelle und einem Quadrat eines Abstands zwischen dem Strahler 5 und dem Detektor 9 abhängige Ausgangsintensität,
D die Summe der Längen der eingangsseitig und ausgangseitig durch die Ansatzschicht 21 verlaufenden Segmente (D = A1 +A3),
$\varrho^M$ die Dichte des Mediums 3,

$\varrho^A$ die Dichte der Ansatzschicht 21,

XA die bekannte insgesamt im Behälter 1 verlaufende Länge des Messstrahlenpfads A, und

$\mu$ eine hier im Medium 1 und in der Ansatzschicht 21 näherungsweise für das Füllgut 3 und den Ansatz als gleich angenommene Proportionalitätskonstante ist, die die exponentielle Abhängigkeit der Strahlungsdämpfung von der Dichte des durchstrahlten Materials wiedergibt,

bedeuten.

Die Proportionalitätskonstante $\mu$ ist in der Regel zumindest näherungsweise bekannt, oder kann durch Referenzmessungen bestimmt werden.

Entsprechend gilt für die von der Vergleichsmesseinrichtung gemessene Strahlungsintensität $I_B$:

$$I_B = I_{0B} e^{-\mu\rho^A kD} e^{-\mu\rho^M (XB - kD)} \qquad (2)$$

mit XB = B1+B2 + B3
worin

$I_{0B}$ eine von der vom Strahler 13 gesendeten Strahlungsintensität, der verwendeten Strahlungsquelle und einem Quadrat des Abstands zwischen dem Strahler 13 und dem Detektor 17 abhängige Ausgangsintensität,

XB die bekannte insgesamt im Behälter 1 verlaufende Länge des Vergleichsstrahlenpfads B, und

$\mu$ die oben angegebene Proportionalitätskonstante,

bedeuten.

Durch Division durch $I_{0A}$, Logarithmieren und Auflösen von Gleichung (1) erhält man einen Ausdruck für die Dichte $\varrho^M$ des Mediums 3:

$$\rho^M = -\frac{\left(\mu\rho^A D + \ln\left(\frac{I_A}{I_{0A}}\right)\right)}{\mu(XA - D)} \qquad (3)$$

Setzt man diesen Ausdruck in eine durch Division durch $I_{0B}$ und anschließendes Logarithmieren von Gleichung (2) erhaltene Gleichung:

$$-\ln\left(\frac{I_B}{I_{0B}}\right) = \mu\rho^A kD + \mu\rho^M (XB - kD) \qquad (4)$$

ein, so ergibt sich bei konstantem k eine quadratische Gleichung für D aus der D bestimmt werden kann.

Unter der oben getroffenen Annahme einer homogenen Dicke d der Ansatzschicht 21 kann die Dicke d nun anhand von D, der Geometrie des Behälters 1 und der Lage des Messstrahlenpfads A im Behälter 1 bestimmt werden. In dem in Fig. 1 dargestellten Ausführungsbeispiel sind die beiden entlang des Messstrahlenpfads A durch die Ansatzschicht 21 verlaufenden Segmente A1 und A3 offensichtlich gleich lang, so dass sich die Dicke d der Ansatzschicht 21 hier gemäß d= ½ D bestimmt.

Anhand der mit der Messeinrichtung gemessene Strahlungsintensität $I_A$ der Dicke d und der Dichte $\varrho^A$ der Ansatzschicht 21 kann nun gemäß Gleichung (3) ein bezüglich des ansatzbedingten Messfehlers korrigiertes Messergebnis für die Dichte des Mediums bestimmt werden.

Auf diese Weise kann der Einfluss von Ansatzbildung auf die erzielbare Messgenauigkeit deutlich reduziert werden. Entsprechend können die Zeiträume zwischen aufeinanderfolgenden Behälterreinigungen in Abhängigkeit von der anwendungsbedingt benötigten Messgenauigkeit optimal angepasst werden. Da nur noch im Bedarfsfall und nicht mehr vorsorglich gereinigt werden muss, wird dies in der Regel zu einer Vergrößerung der Zeitabstände zwischen aufeinanderfolgenden Reinigungen führen.

Im einfachsten Fall kann die Ansatzdetektion vom Betreiber der Messanordnung vorgenommen werden, in dem dieser die hierzu ausgegebenen bzw. angezeigten Messergebnisse der Messeinrichtung und der Vergleichsmesseinrichtung vergleicht.

Vorzugsweise wird dieser Vorgang jedoch automatisiert, in dem die radiometrische Messanordnung mit einer an die Messeinrichtung und die Vergleichsmesseinrichtung angeschlossenen Auswerteeinheit 23 ausgestattet wird, die im Betrieb fortlaufend die Abweichungen zwischen den Messergebnissen der Messeinrichtung und den Messergebnissen der Vergleichsmesseinrichtung bestimmt. Hierzu umfasst die Auswerteeinheit 23 vorzugsweise eine intelligente elektronische Einheit, wie z.B. einem Mikroprozessor, der neben der reinen Abweichungsbestimmung anhand von entsprechender Software weitere Funktionalitäten, wie z.B.

- den Vergleich der Abweichungen mit dem Schwellwert,
- die Terminierung der bedarfsabhängigen Behälterreinigung,
- die Bestimmung der Dicke d der Ansatzschicht 21 bei bekannter Dichte $\varrho^A$ des Ansatzes, sowie
- bei bekannter Dichte $\varrho^A$ des Ansatzes und daraus ermittelter Dicke d der Ansatzschicht 21 die Korrektur des ansatzbedingten Messfehlers der Messeinrichtung,

übernimmt.

Dabei müssen der Auswerteeinheit 23 natürlich auch die für die Ausführung der zusätzlichen Funktionalitäten benötigten Messgrößen und Parameter, insb. die die gemessenen Strahlungsintensitäten $I_A$, $I_B$, die zugehörigen Ausgangsintensitäten $I_{0A}$, $I_{0B}$, das Verhältnis k der Summe D'= B1 + B3 der Längen der entlang des Vergleichsstrahlenpfads B durch die Ansatzschichten 21 verlaufenden Segmente zu der Summe D= A1 + A3 der Längen der entlang des Messstrahlenpfads A durch die Ansatzschichten 21 verlaufenden Segmente, und die Proportionalitätskonstante $\mu$ zugeführt werden.

Die Auswerteeinheit 23 ist vorzugsweise mit eine Ausgabeeinrichtung 25 ausgestattet, über die sie wahlweise

- die Abweichungen,
- den nächsten Reinigungstermin,
- die Dicke d der Ansatzschicht 21, und/oder
- das korrigierte Messergebnis der Messeinrichtung

ausgibt, anzeigt und/oder zu einer weiteren Auswertung und/oder Verarbeitung zur Verfügung stellt.

Darüber hinaus kann sie zusätzlich mit einem Alarm ausgestattet werden, der beispielsweise ausgelöst wird, wenn die Abweichung einen hierfür vorgegebenen Schwellwert erreicht. Darüber hinaus können natürlich weitere anhand der Messergebnisse überprüfbare alarmauslösende Kriterien aufgestellt werden.

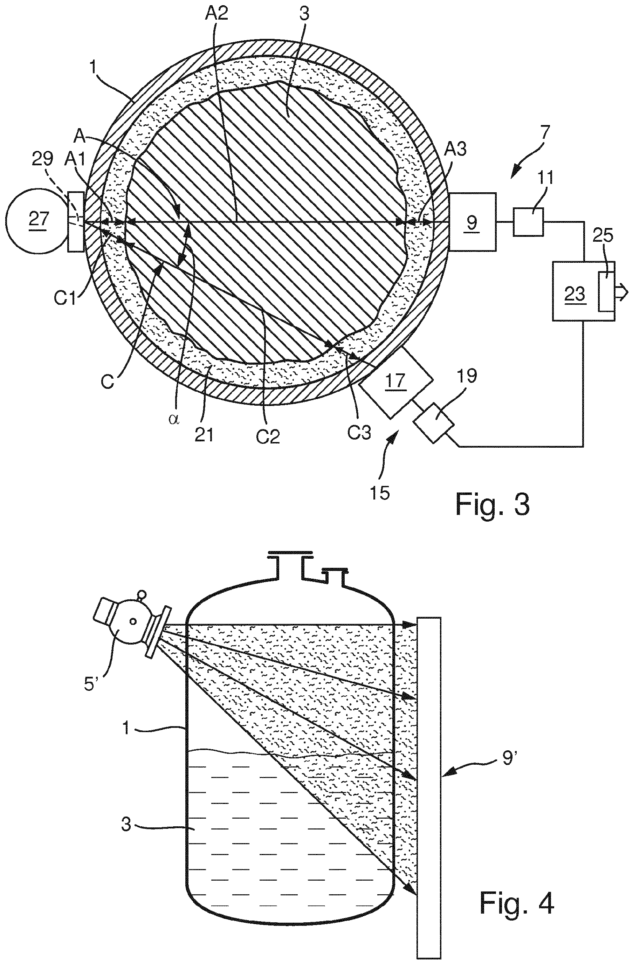

Fig. 3 zeigt eine Abwandlung der in Fig. 1 dargestellten radiometrischen Messanordnung. Sie unterscheidet sich von der in Fig. 1 dargestellten Ausführungsform lediglich dadurch, dass sie nur einen einzigen außenseitlich am Behälter 1 angeordneter radioaktiven Strahler 27 aufweist, der im Betrieb Strahlung entlang des Messstrahlenpfads A und eines hier unter einem Winkel $\alpha$ zum Messstrahlenpfad A verlaufenden Vergleichsstrahlenpfads C aussendet. Dies wird beispielsweise dadurch bewirkt, dass als einziger Strahler 27 eine punktförmige radioaktive Quelle eingesetzt wird, die in einen Strahlenschutzbehälter eingesetzt wird, der eine Austrittsöffnung 29 mit einem dem Winkel $\alpha$ entsprechenden Öffnungswinkel aufweist. Auch bei dieser Variante sind Messstrahlenpfad A und Vergleichsstrahlenpfad C derart vorzugeben, dass die entsprechenden Verhältnisses VA und VC der Summer der Längen der in den Ansatzschichten A1, A3 bzw. C1, C3 verlaufenden Segmente zur Länge des dazwischen im Medium 3 verlaufenden Segments A2, C2 für die beiden Strahlenpfade verschieden ist:

$$VA = \frac{A1 + A3}{A2} \neq VC = \frac{C1 + C3}{C2}$$

Vorzugsweise verläuft der Messstrahlenpfad A auch hier wieder durch den Bereich des Behälters 1, bei dem die insgesamt innerhalb des Behälter 1 entlang dieses Messstrahlenpfads A verlaufende Gesamtlänge maximal ist. Falls das aufgrund der Gegebenheiten vor Ort erforderlich ist, kann auch eine Ausrichtung gewählt werden, bei der beide Strahlenpfade jeweils unter einen Winkel zu einer Diagonale durch ein hier kreisförmigen Behälterquerschnitt verlaufen. In dem Fall müssen die Winkel unter denen die beiden Strahlenpfade zur Diagonalen verlaufen jedoch verschieden sein, um die Ungleichheit der Verhältnisses VA und VC zu gewährleisten.

Messeinrichtung und die Vergleichsmesseinrichtung umfassen auch hier wieder jeweils einen außenseitlich am Behälter 1 angeordneten Detektor 9, 17 und die daran angeschlossene Auswerteeinheit 11, 19. Auch hier ist der Detektor 9 der Messeinheit 7 der Messeinrichtung auf einer dem Strahler 27 entlang des Messstrahlenpfads A gegenüberliegenden Seite des Behälters 1 außenseitlich am Behälter 1 angeordnet, und der Detektor 17 der Messeinheit 15 der Vergleichsmesseinrichtung ist auf einer dem einzigen Strahler 27 entlang des Vergleichsstrahlenpfads C gegenüberliegenden Seite des Behälters 1 außenseitlich am Behälter 1 angeordnet.

Die Erfindung ist auch in radiometrischen Messanordnungen zur Füllstandsmessung einsetzbar. Auch hier wird erfindungsgemäß eine Messeinrichtung zur Bestimmung von dem Füllstand im Behälter 1 entsprechenden Messergebnissen und eine entsprechende Vergleichsmesseinrichtung, mit der ebenfalls der Füllstand im Behälter 1 gemessen wird, eingesetzt. Fig. 4 zeigt einen Längsschnitt durch eine solche Messanordnung in der Ebene der Messeinrichtung.

Im Unterschied zur Dichtemessung werden zur Füllstandsmessung radioaktive vorzugsweise außenseitlich im oberen Bereich des Behälters 1 angeordnete Strahler 5', 13' eingesetzt, deren Strahlung in horizontaler Richtung kollimiert aber in vertikaler Richtung unter einem Öffnungswinkel $\beta$ ausgesendet wird. Dies geschieht regelmäßig indem ein punktförmiger Strahler in einen Strahlenschutzbehälter eingesetzt wird, der eine entsprechende geformte Austrittsöffnung aufweist. Auf diese Weise wird erreicht, dass die Strahlung in vertikaler Richtung denjenigen durch den Öffnungswinkel $\beta$ festgelegten Bereich des Behälters 1 durchdringt, über den hinweg der Füllstand messtechnisch erfasst werden soll. Zur Messung der in vertikaler Richtung über diesen Bereich entlang des Strahlenpfads austretenden Strahlungsintensität ist entsprechend ein diesen Bereich abdeckender Detektor 9', 17', z.B. ein mit einem Szintillationsstab entsprechender Länge ausgestatteter Detektor, einzusetzen. Diese durch die Messgröße bedingten Unterschiede betreffen natürlich sowohl die Messeinrichtung als auch die Vergleichsmesseinrichtung.

Im Übrigen erfolgt die Ansatzdetektion auf die gleiche oben bereits anhand der Dichtemessanordnung beschriebene Weise. Dabei wird aufgrund der ohnehin durch den vertikalen Öffnungswinkel $\beta$ größeren ausgesendeten Strahlungsleistung bevorzugt die vom Aufbau her der in Fig. 1 dargestellten Ausführungsform entsprechende Variante mit zwei radioaktiven Strahlern 5', 13' eingesetzt. Dabei sendet der Strahler 5' bei der Füllstandsmessung in horizontaler Richtung kolimierte und in vertikaler Richtung über den Öffnungswinkel $\beta$ aufgefächerte Strahlung entlang des Messstrahlenpfads A', und der Strahler 13' in horizontaler Richtung kolimierte und in vertikaler Richtung über den Öffnungswinkel $\beta$ aufgefächerte Strahlung entlang des Vergleichsstrahlenpfads B'.

Bei parallel versetztem Verlauf von Mess- und Vergleichstrahlenpfad A', B' in einem Behälter 1 mit kreisförmigem Querschnitt ergibt sich somit in der Draufsicht auch für die radiometrische Füllstandsmessanordnung das in Fig. 1 für die Dichtemessanordnung dargestellte Bild. Die entsprechenden Bezugszeichen der Füllstandsmessanordnung sind in Fig. 1 daher neben den Bezugszeichen der Dichtemessanordnung zusätzlich angegeben.

In Anwendungen in denen grundsätzlich keine Bedenken gegenüber einer erhöhten Strahlungsbelastung bestehen, könnte natürlich auch eine der in Fig. 3 für die Dichtemessung dargestellten Variante entsprechende Ausführungsform mit nur einem einzigen Strahler eingesetzt werden, der Strahlung in horizontaler Richtung unter dem Öffnungswinkel $\alpha$ und in vertikaler Richtung unter dem Öffnungswinkel $\beta$ aussendet.

Auch in Füllstandsmessanordnungen dieser Art kann anhand der Abweichungen der Messergebnisse von Mess- und Vergleichseinrichtung die Dicke d der Ansatzschicht 21 näherungsweise bestimmt werden. Dabei gilt vom physikalischen Grundprinzip her das oben zur Dichtemessanordnung Gesagte analog. Im Unterschied dazu wird bei der Füllstandsmessung jedoch eine über die Höhe des Messbereichs integrierte Strahlungsintensität gemessen, aus der anhand der bei ansatzfreiem Behälter 1 bestimmten Kalibrationsdaten der Füllstand abgeleitet wird. Dies ist bei der Aufstellung der Grundgleichungen aus den physikalischen Gegebenheiten für die Bestimmung der Dicke d der Ansatzschicht 21 und der anhand der Dicke d aufgeführten Korrektur des Füllstands-Messergebnisses der Messeinrichtung zu berücksichtigen. Zusätzlich sind darüber hinaus die Absorptionseigenschaften des Füllguts 3 zu berücksichtigen. Füllstandsmesseinrichtungen werden regelmäßig hinsichtlich der gesendeten Strahlungsleistung derart ausgelegt, dass deren radioaktive Strahlung im Füllgut 3 vollständig absorbiert wird. In dem Fall trägt nur der oberhalb der Füllgutoberfläche befindliche durchstrahlte Bereich des Behälters 1 zur Abweichung zwischen den Messergebnissen von Messeinrichtung und Vergleichseinrichtung bei. Es gibt aber auch Messeinrichtungen, bei denen höhere Strahlungsleistungen eingesetzt werden, die auch das Füllgut 3 durchdringen. In dem Fall ist die gesamte Höhe des Messbereichs und die Absorption im Füllgut 3 zu berücksichtigen. Dabei muss die Absorption im Füllgut 3 bekannt sein oder ermittelt werden.

Sie ist beispielsweise anhand der in Füllstandsmessanwendungen regelmäßig als bekannt vorausgesetzten Dichte $\varrho^M$ des Füllguts 3 bestimmbar.

Grundsätzlich ist die erfindungsgemäße Ansatzdetektion auch in Verbindung mit radiometrischen Messanordnungen einsetzbar, die ein Über- oder Unterschreiten eines vorbestimmten Füllstands feststellen und/oder überwachen. Dabei wird mit einer auf der Höhe eines vorbestimmten Füllstands angeordneten radiometrischen Messeinrichtung ein Über- oder Unterschreiten dieses vorbestimmten Füllstands erfasst. Diese häufig als Grenzschalter bezeichneten Messanordnungen unterscheiden sich von Dichtemesseinrichtungen im Wesentlichen nur durch die Weiterverarbeitung der gemessenen Strahlungsintensität. Auch bei Grenzschaltern wird bei ansatzfreiem Behälter 1 eine Zweipunktkalbration bei einem unterhalb und bei einem oberhalb des zu überwachenden vorbestimmten Füllstands liegenden Füllstand ausgeführt. Auch hier definieren die beiden bei der Zweipunktkalibration im ansatzfreien Behälter 1 gemessenen Strahlungsintensitäten eine Skala, anhand derer den im Betrieb gemessenen Intensitäten ein Messergebnis zugeordnet werden kann.

Die Ansatzdetektion kann somit auch hier anhand dieses Messergebnisses auf die oben bereits in Verbindung mit der Dichtemessanordnung beschriebene Weise ausgeführt werden. Dabei gilt für den Aufbau und die Positionierung der Messeinrichtung und der Vergleichsmesseinrichtung, sowie für den Messstrahlenpfad und den Vergleichsstrahlenpfad das oben bereits in Verbindung mit der Dichtemesseinrichtung Gesagte gleichermaßen.

Zur Feststellung und/oder Überwachung des Über- oder Unterschreitens des vorbestimmten Füllstands genügt es anhand der bei der Zweipunktkalibration gemessenen Strahlungsintensitäten einen Schwellwert für die gemessene Strahlungsintensität oder für das daraus anhand der Kalibrationsdaten abgeleitete Messergebnis festzulegen, bei dessen Überschreiten ein Unterschreiten des vorbestimmten Füllstands angezeigt wird und umgekehrt. Anhand dieses Feststellung- bzw. Überwachungsresultats kann die Ansatzdetektion allerdings nicht ausgeführt werden.

Um die Ansatzdetektion auf die oben beschriebene Weise ausführen zu können, müssen die als Grenzschalter ausgebildete Messeinrichtung und die als Grenzschalter ausgebildete Vergleichsmesseinrichtung über einen Ausgang verfügen, über den das oben beschriebene anhand der bei ansatzfreiem Behälter anhand der Kalibrationsdaten bestimmte Messergebnis der jeweiligen Einrichtung zur Ansatzdetektion zur Verfügung steht.

| 1  | Behälter        |
|----|-----------------|
| 3  | Füllgut         |
| 5  | Strahler        |
| 7  | Messeinheit     |
| 9  | Detektor        |
| 11 | Auswerteeinheit |
| 13 | Strahler        |
| 15 | Messeinheit     |
| 17 | Detektor        |
| 19 | Auswerteeinheit |
| 21 | Ansatzschicht   |
| 23 | Auswerteeinheit |
| 25 | Ausgabeeinrichtung |
| 27 | Strahler        |
| 29 | Austrittsöffnung |

**Patentansprüche**

1. Verfahren zur Ansatzdetektion in einem Behälter (1), in dem eine radiometrische Messeinrichtung zur Messung und/oder Überwachung einer Messgröße, insb. eines Füllstands oder einer Dichte ($\varrho$), eines in dem Behälter (1) befindlichen Füllguts (3), vorgesehen ist,

- die im Betrieb radioaktive Strahlung entlang eines Messstrahlenpfads (A, A') durch den Behälter (1) sendet, eine aus dem Behälter (1) entlang des Messstrahlenpfads (A, A') austretende Strahlungsintensität ($I_A$) misst, und anhand von bei ansatzfreiem Behälter (1) ermittelten Kalibrationsdaten der Messeinrichtung und der gemessenen Strahlungsintensität ($I_A$) ein der Messgröße entsprechendes Messergebnis bestimmt, bei dem
- mittels einer Vergleichsmesseinrichtung radioaktive Strahlung entlang eines Vergleichsstrahlenpfads (B, B', C) durch den Behälter (1) gesendet, eine aus dem Behälter (1) entlang des Vergleichsstrahlenpfads (B, B', C) austretende Strahlungsintensität ($I_B$) gemessen, und anhand von bei ansatzfreiem Behälter (1) ermittelten Kalibrationsdaten der Vergleichsmesseinrichtung und der gemessenen Strahlungsintensität ($I_B$) ein der Messgröße entsprechendes Messergebnis bestimmt wird,

-- wobei der Vergleichsstrahlenpfad (B, B', C) derart durch den Behälter (1) verläuft, dass beim Vorliegen einer Ansatzschicht (21) auf den Innenwänden des Behälters (1), ein Verhältnis (VA) einer Summe der beiden durch die Ansatzschicht (21) verlaufenden Segmente (A1, A3) des Messstrahlenpfads (A) zu der Länge eines zwischen diesen beiden Segmenten (A1, A3) verlaufenden weiteren Segments (A2) des Messstrahlenpfads (A, A') von dem auf die gleiche Weise für den Vergleichsstrahlenpfad (B, B',C) gebildeten Verhältnis (VB, VC) verschieden ist, wobei aufgrund der Kalibration der Messeinrichtung und der Vergleichsmesseinrichtung bei ansatzfreiem Behälter (1) die Messergebnisse der beiden Einrichtungen bei ansatzfreiem Behälter (1) innerhalb der erzielbaren Messgenauigkeit übereinstimmen, und

- ein Auftreten von Ansatzbildung anhand von im laufenden Betrieb ermittelten Abweichungen zwischen den Messergebnissen der Messeinrichtung und den Messergebnissen der Vergleichsmesseinrichtung detektiert wird.

2. Verfahren nach Anspruch 1, bei dem das Verhältnis (VA) der Summe der beiden durch die Ansatzschicht (21) verlaufenden Segmente (A1, A3) des Messstrahlenpfads (A, A') zu der Länge eines zwischen diesen beiden Segmenten (A1, A3) verlaufenden weiteren Segments (A2) des Messstrahlenpfads (A,A') kleiner als das auf die gleiche Weise für den Vergleichsstrahlenpfad (B, B', C) gebildete Verhältnis (VB, VC) ist.

3. Verfahren nach Anspruch 1, bei dem beim Überschreiten eines vorgegebenen Schwellwerts für die Abweichung zwischen den beiden Messergebnissen eine die radiometrische Messung der Messgröße beeinträchtigende Ansatzbildung im Behälter (1) festgestellt wird.

4. Verfahren nach Anspruch 1, bei dem anhand der Abweichungen zwischen den Messergebnissen der Messeinrichtung und den Messergebnissen der Vergleichsmesseinrichtung eine bedarfsabhängige Terminierung von Behälterreinigungen vorgenommen wird.

5. Verfahren nach Anspruch 1, bei dem bei bekannter Dichte ($\varrho^A$) des Ansatzes anhand

- der mit der Messeinrichtung gemessenen Strahlungsintensität ($I_A$) und der mit der Vergleichsmesseinrichtung gemessenen Strahlungsintensität ($I_B$), und
- einer Behältergeometrie und einer Lage von Mess-und Vergleichsstrahlenpfad (A, A', B, B') im Behälter (1),

eine Dicke (d) der im Behälter (1) anhaftenden Ansatzschicht (21) bestimmt wird.

6. Verfahren nach Anspruch 5, bei dem anhand der von der Messeinrichtung gemessenen Strahlungsintensität ($I_A$), der Dicke (d) und der Dichte ($\varrho^A$) der vorliegenden Ansatzschicht (21) ein hinsichtlich eines ansatzbedingten Messfehlers korrigiertes Messergebnis bestimmt wird.

7. Radiometrische Messanordnung zur Messung und/oder Überwachung einer Messgröße, insb. eines Füllstands oder einer Dichte ($\varrho$), eines in einem Behälter (1) befindlichen Füllguts (3), mit

- einer Messeinrichtung,
- die im Betrieb radioaktive Strahlung entlang eines Messstrahlenpfads (A, A') durch den Behälter (1) sendet,

-- die einen Detektor (9, 9') umfasst, der eine aus dem Behälter (1) entlang des Messstrahlenpfads (A, A') austretende Strahlungsintensität ($I_A$) misst, und
-- die eine Auswerteeinheit (11, 11') umfasst, die anhand von bei ansatzfreiem Behälter (1) ermittelten Kalibrationsdaten der Messeinrichtung (7) und der gemessenen Strahlungsintensität ($I_A$) ein der Messgröße entsprechendes Messergebnis bestimmt und ausgibt, und

- einer Vergleichsmesseinrichtung,

-- die im Betrieb radioaktive Strahlung entlang eines Vergleichsstrahlenpfads (B, B', C) durch den Behälter (1) hindurch sendet,
-- wobei der Vergleichsstrahlenpfad (B, B', C) derart durch den Behälter (1) verläuft, dass beim Vorliegen einer Ansatzschicht (21) auf den Innenwänden des Behälters (1) ein Verhältnis (VA) einer Summe der beiden durch die Ansatzschicht (21) verlaufenden Segmente (A1, A3) des Messstrahlenpfads (A, A') zu der Länge eines zwischen diesen beiden Segmenten (A1, A3) verlaufenden weiteren Segments (A2) des Messstrahlenpfads (A, A') von dem auf die gleiche Weise für den Vergleichsstrahlenpfad (B, B', C) gebildeten Verhältnis (VB, VC) verschieden ist,
-- die einen Detektor (17, 17') umfasst, der eine aus dem Behälter (1) entlang des Vergleichsstrahlenpfads (B, B', C) austretende Strahlungsintensität misst, und

- die eine Auswerteeinheit (19, 19') umfasst, die anhand von bei ansatzfreiem Behälter (1) ermittelten Kalibrationsdaten der Vergleichsmesseinrichtung (15) und der gemessenen Strahlungsintensität ($I_B$) ein der Messgröße entsprechendes Messergebnis bestimmt, und für eine Detektion von Ansatzbildung im Behälter (1) zur Verfügung stellt, bei der Ansatz anhand von im laufenden Betrieb ermittelten Abweichungen zwischen den Messergebnissen der Messeinrichtung und den Messergebnissen der Vergleichsmesseinrichtung detektiert wird.

8.  Radiometrische Messanordnung nach Anspruch 7, mit einer an die Messeinrichtung und die Vergleichsmesseinrichtung angeschlossenen Auswerteinheit (23), die im Betrieb fortlaufend die Abweichungen zwischen den Messergebnissen der Messeinrichtung und den Messergebnissen der Vergleichsmesseinrichtung bestimmt.

9.  Radiometrische Messanordnung nach Anspruch 7, bei der die Messeinrichtung und die Vergleichsmesseinrichtung jeweils einen außenseitlich am Behälter (1) angeordneten radioaktiven Strahler (5, 5', 13, 13') aufweisen, und die Detektoren (9, 9',17, 17') der Messeinrichtung und der Vergleichsmesseinrichtung jeweils auf einer dem jeweiligen Strahler (5, 5', 13, 13') entlang des Mess- bzw. des Vergleichsstrahlenpfads (A, A', B, B') gegenüberliegenden Seite des Behälters (1) außenseitlich am Behälter (1) angeordnet sind.

10. Radiometrische Messeinrichtung nach Anspruch 9, bei der

    - der Behälter (1) eine kreisförmige Querschnittsfläche aufweist, und
    - der Messstrahlenpfad (A, A') parallel versetzt zum Vergleichsstrahlenpfad (B, B') verläuft.

11. Radiometrische Messanordnung nach Anspruch 7, bei der

    - ein nur einziger außenseitlich am Behälter (1) angeordneter radioaktiver Strahler (27) vorgesehen ist, der im Betrieb Strahlung entlang des Messstrahlenpfads (A) und entlang des Vergleichsstrahlenpfads (C) aussendet,
    - der Messstrahlenpfad (A) und der Vergleichsstrahlenpfad (C) unter einem Winkel (a) zueinander verlaufen,
    - der Detektor (9) der Messeinrichtung auf einer dem einzigen Strahler (27) entlang des Messstrahlenpfads (A, B) gegenüberliegenden Seite des Behälters (1) außenseitlich am Behälter (1) angeordnet ist, und
    - der Detektor (17) der Vergleichsmesseinrichtung auf einer dem einzigen Strahler (27) entlang des Vergleichsstrahlenpfads (C) gegenüberliegenden Seite des Behälters (1) außenseitlich am Behälter (1) angeordnet ist.

12. Radiometrische Messanordnung nach Anspruch 7, bei der

    - die Messeinrichtung und die Vergleichsmesseinrichtung jeweils eine Einrichtung zur Feststellung und/oder Überwachung eines Über- oder Unterschreitens eines vorbestimmten Füllstands in dem Behälter (1) sind,
    - die Messeinrichtung und die Vergleichsmesseinrichtung jeweils einen Ausgang aufweisen, über den sie ein der von ihnen gemessenen Strahlungsintensität anhand von bei ansatzfreiem Behälter (1) ermittelten Kalibrationsdaten zugeordnetes Messergebnis ausgeben, und
    - die Messeinrichtung anhand der gemessenen Strahlungsintensität oder anhand des Messergebnisses das Über- oder Unterschreiten des vorbestimmten Füllstands feststellt und/oder überwacht.

**Claims**

1.  Procedure for the detection of buildup in a vessel (1) in which a radiometric measuring unit is provided for the measurement and/or monitoring of a measured variable, particularly a level or a density (e), of a product (3) in the vessel (1),

    - wherein, during operation, said measuring unit emits radioactive radiation along a measurement radiation path (A, A') through the vessel (1), measures a radiation intensity ($I_A$) exiting the vessel (1) along the measurement radiation path (A, A'), and determines a measurement result that corresponds to the measured variable using calibration data of the measuring unit, which are determined when there is no buildup in the vessel (1), and using the measured radiation intensity ($I_A$), wherein
    - using a reference measuring unit, radioactive radiation is transmitted along a reference radiation path (B, B', C) through the vessel (1), a radiation intensity ($I_B$) exiting the vessel (1) is measured along the reference radiation path (B, B', C), and a measurement result that corresponds to the measured variable is determined using calibration data of the reference measuring unit, which are determined when there is no buildup in the vessel (1) and using the measured radiation intensity $I_B$,

- wherein the reference radiation path (B, B', C) extends through the vessel (1) in such a way that - when a layer of deposit buildup (21) is present on the inner walls of the vessel (1) - a ratio (VA) of a sum of the two segments (A1, A3) of the measurement radiation path (A) running through the layer of deposit buildup (21) to the length of another segment (A2) of the measurement radiation path (A, A') running between these two segments (A1, A3) differs from the ratio (VB, VC) calculated in the same way for the reference radiation path (B, B',C), wherein - on account of the calibration of the measuring unit and the reference measuring unit when there is no buildup in the vessel (1) - the measurement results of the two units when there is no buildup in the vessel (1) correspond to one another within the range of the achievable measuring accuracy, and
- the presence of deposit buildup is detected on the basis of deviations, determined during operation, between the measurement results of the measuring unit and the measurement results of the reference measuring unit.

2. Procedure as claimed in Claim 1, wherein the ratio (VA) of the sum of the two segments (A1, A3) of the measurement radiation path (A, A') running through the layer of deposit buildup (21) to the length of another segment (A2) of the measurement radiation path (A, A') running between these two segments (A1, A3) is smaller than the ratio (VB, VC) calculated in the same way for the reference radiation path (B, B', C).

3. Procedure as claimed in Claim 1, wherein deposit buildup in the vessel (1) that negatively affects the radiometric measurement of the measured variable is determined when a predefined threshold value for the deviation between the two measurement results is exceeded.

4. Procedure as claimed in Claim 1, wherein needs-dependent vessel cleaning cycles are scheduled on the basis of the deviations between the measurement results of the measuring unit and the measurement results of the reference measuring unit.

5. Procedure as claimed in Claim 1, wherein at the known density ($_e^A$) of the buildup a thickness (d) of the layer of deposit buildup (21) present in the vessel (1) is determined using

- the radiation intensity ($I_A$) measured with the measuring unit and the radiation intensity ($I_B$) measured with the reference measuring unit, and
- a vessel geometry and a position of the measurement path and reference radiation path (A, A', B, B') in the vessel (1),

6. Procedure as claimed in Claim 5, wherein - using the radiation intensity ($I_A$) measured by the measuring unit, the thickness (d) and the density ($_e^A$) of the layer of deposit buildup (21) that is present - a measuring result is determined that is corrected with regard to a measured error that is caused by buildup.

7. Radiometric measuring arrangement for the measurement and/or monitoring of a measured variable, particularly of a level or a density ($_e$) of a product (3) located in a vessel (1), with

- a measuring unit,
- which emits, during operation, radioactive radiation along a measurement radiation path (A, A') through the vessel (1),
- which comprises a detector (9, 9') that measures a radiation intensity ($I_A$) exiting the container (1) along the measurement radiation path (A, A'), and
- which comprises an evaluation unit (11, 11'), which determines and displays a measurement result that corresponds to the measured variable using calibration data of the measuring unit (7) that are determined when there is no buildup in the vessel (1) and using the measured radiation intensity ($I_A$), and
- a reference measuring unit,
- which emits, during operation, radioactive radiation along a reference radiation path (B, B', C) through the vessel (1),
- wherein the reference radiation path (B, B', C) runs through the vessel (1) in such a way that - in the event of a layer of deposit buildup (21) on the interior walls of the vessel (1) - a ratio (VA) of a sum of the two segments (A1, A3) of the measurement radiation path (A, A') running through the layer of deposit buildup (21) to the length of another segment (A2) of the measurement radiation path (A, A') running between these two segments (A1, A3) is different to the ratio (VB, VC) calculated in the same way for the reference radiation path (B, B', C),
- which comprises a detector (17,17,') that measures a radiation intensity exiting the container (1) along the reference radiation path (B, B', C), and
- which comprises an evaluation unit (19, 19') that determines a measurement result, which corresponds to the measured variable, using calibration data of the reference measuring unit (15) that are determined when there is no buildup in the vessel (1) and using the measured radiation intensity ($I_B$), and makes the result available for the detection of buildup in the vessel (1), wherein said buildup is detected on the basis of deviations, determined during operation, between the measurement results of the measuring unit and the measurement results of the reference measuring unit.

8. Radiometric measuring arrangement as claimed in Claim 7, with an evaluation unit (23) that is connected to the measuring unit and the reference measuring unit and, during operation, continuously determines the deviations between the measurement results of the measuring unit and the measurement results of the reference measuring unit.

9. Radiometric measuring arrangement as claimed in Claim 7, wherein the measuring unit and the reference measuring unit each has a radioactive emitter (5, 5', 13, 13') arranged on the outside of the vessel (1), and wherein the detectors (9, 9', 17, 17') of the measuring unit and of the reference measuring unit are arranged on the outside of the vessel (1), on a side of the vessel (1) opposite the respective emitter (5, 5', 13,13'), along the measurement radiation path or the reference radiation path (A, A', B, B').

10. Radiometric measuring unit as claimed in Claim 9, wherein

- the vessel (1) has a circular cross-sectional area, and
- the measurement radiation path (A, A') is parallel offset in relation to the reference radiation path (B, B').

11. Radiometric measuring arrangement as claimed in Claim 7, wherein

- a single radioactive emitter (27) is provided, and arranged on the vessel (1) on the outside, wherein, during operation, said emitter emits radiation along the measurement radiation path (A) and along the reference radiation path (C),
- the measurement radiation path (A) and the reference radiation path (C) form an angle (a) in relation to one another,
- the detector (9) of the measuring unit is arranged on the outside of the vessel (1) on a side of the vessel (1) that is opposite to the single emitter (27) along the measurement radiation path (A, B), and
- the detector (17) of the reference measuring unit is arranged on the outside of the vessel (1) on a side of the vessel (1) that is opposite to the single emitter (27) along the reference radiation path (C).

12. Radiometric measuring arrangement as claimed in Claim 7, wherein

- the measuring unit and the reference measuring unit are each an apparatus to determine and/or monitor the undershooting or overshooting of a predefined level in the tank (1)
- the measuring unit and the reference measuring unit each has an output via which they output a measurement result assigned to the radiation intensity measured by them using calibration data determined when there is no buildup in the vessel (1), and
- the measuring unit determines and/or monitors the undershooting or overshooting of a predefined level on the basis of the measured radiation intensity or on the basis of the measurement result.

**Revendications**

1. Procédé destiné à la détection d'un dépôt dans un réservoir (1), dans lequel est prévu un dispositif de mesure radiométrique destiné à la mesure et/ou à la surveillance d'une grandeur mesurée, notamment un niveau ou une densité ($_e$), d'un produit (3) se trouvant dans le réservoir (1),

- lequel dispositif émet, en fonctionnement, un rayonnement radioactif le long d'un trajet de faisceau de mesure (A, A') à travers le réservoir (1), mesure une intensité de rayonnement ($I_A$) émanant du réservoir (1) le long du trajet de faisceau de mesure (A, A'), et détermine un résultat de mesure correspondant à la grandeur mesurée au moyen des données d'étalonnage du dispositif de mesure déterminées avec un réservoir (1) exempt de dépôt, et au moyen de l'intensité de rayonnement ($I_A$) mesurée, pour lequel
- est émis, au moyen d'un dispositif de mesure de référence, un rayonnement radioactif le long d'un trajet de faisceau de référence (B, B', C) à travers le réservoir (1), est mesurée une intensité de rayonnement ($I_B$) émanant du réservoir (1) le long du trajet de faisceau de référence (B, B', C), et déterminé un résultat de mesure correspondant à la grandeur mesurée au moyen des données d'étalonnage du dispositif de mesure de référence déterminées avec un réservoir (1) exempt de dépôt, et au moyen de l'intensité de rayonnement ($I_B$) mesurée,
- pour lequel le trajet de faisceau de référence (B, B', C) s'étend à travers le réservoir (1) de telle sorte qu'en présence d'une couche de dépôt (21) sur les parois intérieures du réservoir (1), un rapport (VA) entre une somme des deux segments (A1, A3) du trajet de faisceau de mesure (A) traversant la couche de dépôt (21) et la longueur d'un segment (A2) supplémentaire du trajet de faisceau de mesure (A, A') s'étendant entre ces deux segments (A1, A3) est différent du rapport (VB, VC) formé de la même manière pour le trajet de faisceau de référence (B, B',C), les résultats de mesure des deux dispositifs en présence d'un réservoir exempt de dépôt coïncidant au sein de la précision de mesure atteignable, en raison de l'étalonnage du dispositif de mesure et du dispositif de mesure de référence en présence d'un réservoir exempt de dépôt (1), et
- une formation de dépôt est détectée au moyen d'écarts, déterminés pendant le fonctionnement courant, entre les résultats de mesure du dispositif de mesure et les résultats de mesure du dispositif de mesure de référence.

2. Procédé selon la revendication 1, pour lequel le rapport (VA) entre la somme des deux segments (A1, A3) du trajet de faisceau de mesure (A, A') traversant la couche de dépôt (21) et la longueur d'un segment (A2) supplémentaire du trajet de faisceau de mesure (A, A') s'étendant entre ces deux segments (A1, A3) est inférieur au rapport (VB, VC) formé de la même manière pour le trajet de faisceau de référence (B, B', C).

3. Procédé selon la revendication 1, pour lequel, en cas de dépassement d'une valeur seuil prédéfinie pour l'écart entre les deux résultats de mesure, est constatée une formation de dépôt à l'intérieur du réservoir (1), laquelle formation entrave la mesure radiométrique de la grandeur mesurée.

4. Procédé selon la revendication 1, pour lequel une planification de nettoyages du réservoir en fonction des besoins est réalisée au moyen des écarts entre les résultats de mesure du dispositif de mesure et les résultats de mesure du dispositif de mesure de référence.

5. Procédé selon la revendication 1, pour lequel, lorsque la densité ($_e$A) du dépôt est connue,

- une épaisseur (d) de la couche de dépôt (21) présente dans le réservoir (1) est déterminée au moyen
- de l'intensité de rayonnement mesurée avec le dispositif de mesure ($I_A$) et de l'intensité de rayonnement mesurée avec le dispositif de mesure de référence ($_{IB}$), et
- d'une géométrie du réservoir et d'une position des trajets de faisceau de mesure et de référence (A, A', B, B') dans le réservoir (1).

6. Procédé selon la revendication 5, pour lequel un résultat de mesure corrigé par rapport à une erreur de mesure due au dépôt, est déterminé au moyen de l'intensité de rayonnement ($I_A$) mesurée par le dispositif de mesure, de l'épaisseur (d) et de la densité ($_e$A) de la couche de dépôt (21) présente.

7. Dispositif de mesure radiométrique destiné à la mesure et/ou la surveillance d'une grandeur mesurée, notamment d'un niveau ou d'une densité ($_e$) d'un produit (3) se trouvant dans un réservoir (1), avec

- un dispositif de mesure,
- qui émet, en fonctionnement, un rayonnement radioactif le long d'un trajet de faisceau de mesure (A, A') à travers le réservoir (1),
- qui comprend un détecteur (9, 9') mesurant une intensité de rayonnement ($I_A$) émanant du réservoir (1) le long du trajet de faisceau de mesure (A, A'), et
- qui comprend une unité d'exploitation (11, 11'), laquelle détermine et émet un résultat de mesure correspondant à la grandeur mesurée au moyen des données d'étalonnage du dispositif de mesure (7), déterminées en l'absence de dépôt dans le réservoir (1), et au moyen de l'intensité de rayonnement ($_{IA}$) mesurée, et
- un dispositif de mesure de référence,
- qui émet, en fonctionnement, un rayonnement radioactif le long de d'un trajet de faisceau de référence (B, B', C) à travers le réservoir (1),
- pour lequel le trajet de faisceau de référence (B, B', C) s'étend à travers le réservoir (1) de telle sorte qu'en présence d'une couche de dépôt (21) sur les parois intérieures du réservoir (1), un rapport (VA) entre une somme des deux segments (A1, A3) du trajet de faisceau de mesure (A, A') traversant la couche de dépôt (21) et la longueur d'un segment (A2) supplémentaire du trajet de faisceau de mesure (A, A') s'étendant entre ces deux segments (A1, A3) du trajet de faisceau de mesure (A, A') est différent du rapport (VB, VC) formé de la même manière pour le trajet de faisceau de référence (B, B',C),

- qui comprend un détecteur (17,17') mesurant une intensité de rayonnement émanant du réservoir (1) le long du trajet de faisceau de référence (B, B', C), et

- qui comprend une unité d'exploitation (19, 19'), laquelle unité détermine un résultat de mesure correspondant à la grandeur mesurée sur la base des données d'étalonnage du dispositif de mesure de référence (15) déterminées en l'absence de dépôt dans le réservoir (1) et sur la base de l'intensité de rayonnement ($I_B$) mesurée, et le met à disposition pour une détection de la formation de dépôt dans le réservoir (1), ce dépôt étant détecté sur la base des écarts entre les résultats de mesure du dispositif de mesure et les résultats de mesure du dispositif de mesure de référence déterminés pendant le fonctionnement.

8. Dispositif de mesure radiométrique selon la revendication 7, avec une unité d'exploitation (23) raccordée au dispositif de mesure et au dispositif de mesure de référence, laquelle unité détermine continuellement, en fonctionnement, les écarts entre les résultats de mesure du dispositif de mesure et les résultats de mesure du dispositif de mesure de référence

9. Dispositif de mesure radiométrique selon la revendication 7, pour lequel le dispositif de mesure et le dispositif de mesure de référence comportent chacun un émetteur radioactif (5, 5', 13, 13') disposé à l'extérieur du réservoir (1), et pour lequel les détecteurs (9, 9',17, 17') du dispositif de mesure et du dispositif de mesure de référence sont chacun disposés à l'extérieur du réservoir (1), sur un côté du réservoir (1) opposé à l'émetteur (5, 5', 13,13') respectif, le long du trajet de faisceau de mesure ou de référence (A, A', B, B').

10. Dispositif de mesure radiométrique selon la revendication 9, pour lequel

- le réservoir (1) présente une superficie de section circulaire, et
- le trajet de faisceau de mesure (A, A') est décalé parallèlement au trajet du faisceau de référence (B, B').

11. Dispositif de mesure radiométrique selon la revendication 7, pour lequel

- est prévu un unique émetteur radioactif (27) disposé à l'extérieur sur le réservoir (1), lequel émetteur émet un rayonnement le long du trajet de faisceau de mesure (A) et le long du trajet de faisceau de référence (C),
- le trajet de faisceau de mesure (A) et le trajet de faisceau de référence (C) forment un angle (a) l'un par rapport à l'autre,
- le détecteur (9) du dispositif de mesure est disposé à l'extérieur du réservoir (1), sur un côté du réservoir (1) situé à l'opposé de l'unique émetteur (27) le long du trajet de faisceau de mesure (A, B), et
- le détecteur (17) du dispositif de mesure de référence est disposé à l'extérieur du réservoir (1), sur un côté du réservoir (1) situé à l'opposé de l'unique émetteur (27) le long du trajet de faisceau de mesure de référence (C).

12. Dispositif de mesure radiométrique selon la revendication 7, pour lequel

- le dispositif de mesure et le dispositif de mesure de référence constituent chacun un dispositif destiné à la détermination et/ou à la surveillance d'un dépassement par excès ou par défaut d'un niveau prédéterminé dans le réservoir (1),
- le dispositif de mesure et le dispositif de mesure de référence comportent chacun une sortie, à travers laquelle ils délivrent un résultat de mesure affecté à l'intensité de rayonnement mesurée par eux sur la base des données d'étalonnage déterminées avec un réservoir (1) exempt de dépôt, et
- le dispositif de mesure détermine et/ou surveille le dépassement par excès ou par défaut du niveau prédéterminé au moyen de l'intensité de rayonnement mesurée ou au moyen du résultat de mesure.

Fig. 1

Fig. 2

A2　3

1

A

29　A1

27

C1

A3

7

11

9

25

23

17

19

C

α　21　C2　C3

15

Fig. 3

5'

1

3

9'

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0218883 A

- US 3594575A1 A